# EUROPEAN PATENT APPLICATION

(11) **EP 4 559 731 A1**
(43) Date of publication of application: **28.05.2025**
(21) Application number: 24214494.7
(22) Date of filing: 21.11.2024
(51) Int. Cl.: B60L 53/16, B60L 53/18, B60L 53/302, H01R 13/00, H01R 13/02

(54) **REAR HOUSING FOR CHARGING SEAT AND CHARGING SEAT**

(30) Priority: 24.11.2023 CN 202323197523 U
(71) Applicant: Tyco Electronics Technology (SIP) Ltd., Suzhou 215026 (CN); Tyco Electronics (Shanghai) Co., Ltd., Pilot Free Trade Zone Shanghai 200131 (CN)
(72) Inventor: Xia, Leilei, Shanghai, 200233 (CN); Jiang, Kaixuan, Shanghai, 200233 (CN); Zhu, Fangyue, Shanghai, 200233 (CN); Zhang, Qun, Suzhou, 32 215123 (CN)
(74) Representative: Grünecker Patent- und Rechtsanwälte PartG mbB

(57) **Abstract**

The present invention discloses a rear housing for a charging seat and a charging seat. A cooling chamber (20) is formed in the rear housing (2) of the charging seat, the cooling chamber (20) has an inlet pipe joint (20b) for connecting with an inlet pipe (4) and a cooling core pipe joint (20a) for connecting with a cooling core pipe (32) of a charging cable (3), so that the cooling liquid can flow through the cooling chamber (20) of the rear housing (2) of the charging seat and the cooling core pipe (32) of the charging cable (3) to cool the interior of the charging seat and the charging cable (3). In the present invention, the cooling chamber in the rear housing of the charging seat connects the cooling core pipe of the charging cable to the cooling circuit, allowing the cooling liquid to flow through the cooling chamber of the rear housing of the charging seat and the cooling core pipe of the charging cable, thereby enabling sufficient cooling of the interior of the charging seat and the charging cable. In addition, in some embodiments of the present invention, the thermal conductive component in the charging seat can quickly transfer the heat from the charging terminal to the cooling chamber, thereby improving the cooling effect of the charging seat.

## Description

### CROSS-REFERENCE TO RELATED APPLICATION

This application claims the benefit of Chinese Patent Application No. CN202323197523.3 filed on November 24, 2023 in the State Intellectual Property Office of China, the whole disclosure of which is incorporated herein by reference.

### BACKGROUND OF THE INVENTION

### Field of the Invention

The present invention relates to a rear housing for a charging seat and a charging seat comprising the rear housing.

### Description of the Related Art

In the prior art, the charging seat usually includes a housing, a charging terminal set in the housing, and a charging cable electrically connected to the charging terminal. In order to improve the charging speed, it is necessary to increase the charging current. Currently, the charging current requirement is as high as 600A, and it may be further increased to 1000A in the future. When this high current flows through the charging cable and charging terminal, it will cause a sharp rise in the temperature inside the housing and the temperature of the charging cable. In order to prevent excessive temperature rise, in existing technology, the diameter of the charging cable is usually increased, but this will increase the volume and weight of the charging seat product, and lead to higher costs.

### SUMMARY OF THE INVENTION

The present invention has been made to overcome or alleviate at least one aspect of the above mentioned disadvantages.

According to an aspect of the present invention, there is provided a rear housing for a charging seat. A cooling chamber is formed in the rear housing of the charging seat, the cooling chamber has an inlet pipe joint for connecting with an inlet pipe and a cooling core pipe joint for connecting with a cooling core pipe of a charging cable, so that the cooling liquid can flow through the cooling chamber of the rear housing of the charging seat and the cooling core pipe of the charging cable to cool the interior of the charging seat and the charging cable.

According to an exemplary embodiment of the present invention, the cooling chamber has at least two cooling core pipe joints, which are used to connect with the cooling core pipes of at least two charging cables respectively, so that the cooling liquid can flow through the cooling core pipes of the at least two charging cables simultaneously to cool the at least two charging cables.

According to another exemplary embodiment of the present invention, the cooling chamber has two cooling core pipe joints, which are arranged on both sides of the inlet pipe joint and spaced apart from the inlet pipe joint by a predetermined distance.

According to another aspect of the present invention, there is provided a charging seat. The charging seat comprises of: a front housing; the above rear housing assembled onto the rear end of the front housing; a charging terminal which is provided in the front housing of the charging seat and its rear end extends into the inner cavity of the rear housing of the charging seat; and a charging cable which is inserted into the inner cavity of the rear housing of the charging seat and electrically connected to the rear end of the charging terminal. The charging cable comprises a conductor and a cooling core pipe, the front end of the conductor is electrically connected to the rear end of the charging terminal, and the cooling core pipe is connected to the cooling core pipe joint of the cooling chamber of the rear housing, so that the cooling liquid can flow through the cooling chamber of the rear housing and the cooling core pipe of the charging cable.

According to an exemplary embodiment of the present invention, the conductor of the charging cable is tubular, and the cooling core pipe is provided in the conductor, the charging cable also includes an outer insulation layer wrapped around the outside of the conductor.

According to another exemplary embodiment of the present invention, the front end of the conductor of the charging cable and the rear end of the charging terminal are flat and welded together.

According to another exemplary embodiment of the present invention, the charging seat further comprises a thermal conductive component which is installed in the inner cavity of the rear housing of the charging seat and is in physical contact with both the rear end of the charging terminal and the outer wall surface of the cooling chamber to transfer heat from the rear end of the charging terminal to the cooling chamber.

According to another exemplary embodiment of the present invention, the front end of the conductor and the rear end of the charging terminal are wrapped in the thermal conductive component and in thermal contact with the inner surface of the thermal conductive component, and the outer surface of the thermal conductive component is in thermal contact with the outer wall surface of the cooling chamber.

According to another exemplary embodiment of the present invention, the thermal conductive component has a pair of flat inner surfaces and a pair of flat outer surfaces that are opposite in the thickness direction of the rear end of the charging terminal; the pair of flat inner surfaces of the thermal conductive component are in thermal contact with the front end of the conductor and the rear end of the charging terminal, respectively; one of the pair of flat outer surfaces of the thermal conductive component is in thermal contact with the outer wall surface of the cooling chamber.

According to another exemplary embodiment of the present invention, the charging seat comprises multiple charging terminals, multiple charging cables, and multiple thermal conductive components, the multiple charging terminals are electrically connected to the multiple charging cables, respectively, and are thermally connected to the outer wall surface of the cooling chamber through a corresponding thermal conductive component.

According to another exemplary embodiment of the present invention, multiple first snap slots are formed on the peripheral wall of the front end of the rear housing, and the multiple first snap slots are distributed at intervals in the circumferential direction of the rear housing; multiple first protrusions are formed on the rear end of the rear housing, and the multiple first protrusions are respectively engaged with the multiple first snap slots to fix the front end of the rear housing to the rear end of the front housing.

According to another exemplary embodiment of the present invention, the charging seat further comprises of: a signal terminal which is provided in the front housing of the charging seat and its rear end extends into the rear housing of the charging seat; and a signal cable, one end of which extends into the rear housing of the charging seat and is electrically connected to the rear end of the signal terminal.

According to another exemplary embodiment of the present invention, the charging seat further comprises a rear cover which is installed on the rear port of the rear housing to cover the rear port of the rear housing. A first through-hole allowing the charging cable to pass through, a second through-hole allowing the signal cable to pass through, and a third through-hole allowing the inlet pipe joint to pass through are formed in the rear cover.

According to another exemplary embodiment of the present invention, multiple second protrusions are formed on the rear end of the charging seat housing, and the multiple second protrusions are distributed at intervals in the circumferential direction of the charging seat housing; multiple second snap slots are formed on the rear cover, and the multiple second snap slots are respectively engaged with the multiple second protrusions to fix the rear cover to the rear end of the rear housing.

According to another exemplary embodiment of the present invention, the charging seat further comprises a sealing element which is installed in the rear port of the rear housing to seal the rear port of the rear housing. The charging cable, the signal cable, and the inlet pipe joint pass through the sealing element, and the rear cover is pressed against the sealing element to position the sealing element in the rear port of the rear housing.

According to another exemplary embodiment of the present invention, the charging seat further comprises an inlet pipe, one end of which is connected to the inlet pipe joint, is used to input the cooling liquid into the cooling chamber.

According to another exemplary embodiment of the present invention, the cooling chamber also has a discharge port. The charging seat further comprises of: a sealing plug which is inserted into the discharge port; and a sealing ring which is fitted onto the sealing plug. The sealing ring is compressed between the sealing plug and the inner wall of the discharge port to achieve sealing between the two.

In the aforementioned exemplary embodiments according to the present invention, the cooling chamber in the rear housing of the charging seat connects the cooling core pipe of the charging cable to the cooling circuit, so that the cooling liquid can flow through the cooling chamber of the rear housing of the charging seat and the cooling core pipe of the charging cable, thereby enabling sufficient cooling of the interior of the charging seat and the charging cable.

In addition, in the aforementioned exemplary embodiments according to the present invention, the thermal conductive component in the charging seat can quickly transfer the heat from the charging terminal to the cooling chamber, thereby improving the cooling effect of the charging seat.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a charging seat according to an exemplary embodiment of the present invention;
Figure 2 shows a cross-sectional view of a charging seat according to an exemplary embodiment of the present invention, in which a thermal conductive component is shown;
Figure 3 shows a cross-sectional view of a charging seat according to an exemplary embodiment of the present invention, wherein the cooling core pipe of the charging cable and the cooling core pipe joint of the cooling chamber are shown;
Figure 4 shows a cross-sectional view of a charging seat according to an exemplary embodiment of the present invention, showing the inlet pipe joint of the inlet pipe and the cooling chamber;
Figure 5 shows a cross-sectional view of a charging seat according to an exemplary embodiment of the present invention, which illustrates the cooling core pipe of the charging cable, the cooling core pipe joint of the cooling chamber, the inlet pipe, and the inlet pipe joint of the cooling chamber;
Figure 6 shows a cross-sectional view of the rear housing of a charging seat according to an exemplary embodiment of the present invention, which illustrates the cooling core pipe of the charging cable, the cooling core pipe joint of the cooling chamber, the inlet pipe, and the inlet pipe joint of the cooling chamber;
Figure 7 shows a cross-sectional view of the rear housing of a charging seat according to an exemplary embodiment of the present invention, which illustrates the cooling core pipe of the charging cable, the cooling core pipe joint of the cooling chamber, and the thermal conductive component;
Figure 8 shows a cross-sectional view of the rear housing of the charging seat according to an exemplary embodiment of the present invention, wherein the inlet pipe joint of the inlet pipe and the cooling chamber is shown; and
Figure 9 shows an illustrative exploded view of the rear housing, charging cable, and inlet pipe according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a rear housing for a charging seat. A cooling chamber is formed in the rear housing of the charging seat, the cooling chamber has an inlet pipe joint for connecting with an inlet pipe and a cooling core pipe joint for connecting with a cooling core pipe of a charging cable, so that the cooling liquid can flow through the cooling chamber of the rear housing of the charging seat and the cooling core pipe of the charging cable to cool the interior of the charging seat and the charging cable.

According to another general concept of the present invention, there is provided a charging seat. The charging seat comprises of: a front housing; the above rear housing assembled onto the rear end of the front housing; a charging terminal which is provided in the front housing of the charging seat and its rear end extends into the inner cavity of the rear housing of the charging seat; and a charging cable which is inserted into the inner cavity of the rear housing of the charging seat and electrically connected to the rear end of the charging terminal. The charging cable comprises a conductor and a cooling core pipe, the front end of the conductor is electrically connected to the rear end of the charging terminal, and the cooling core pipe is connected to the cooling core pipe joint of the cooling chamber of the rear housing, so that the cooling liquid can flow through the cooling chamber of the rear housing and the cooling core pipe of the charging cable.

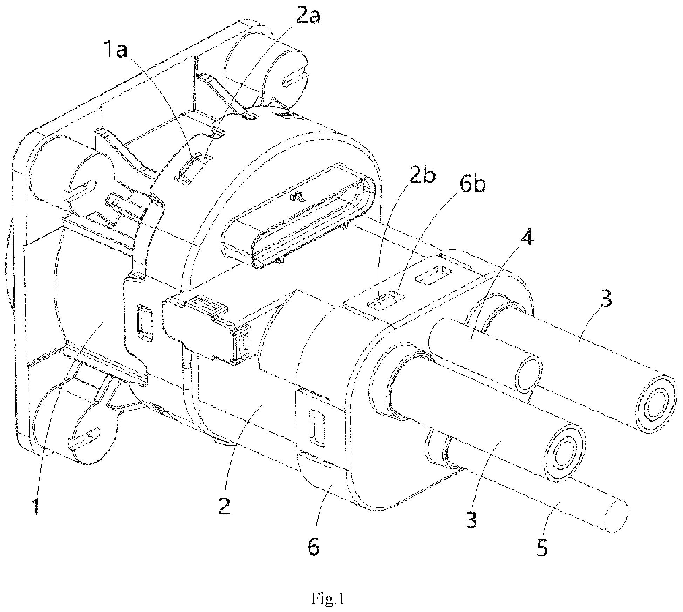

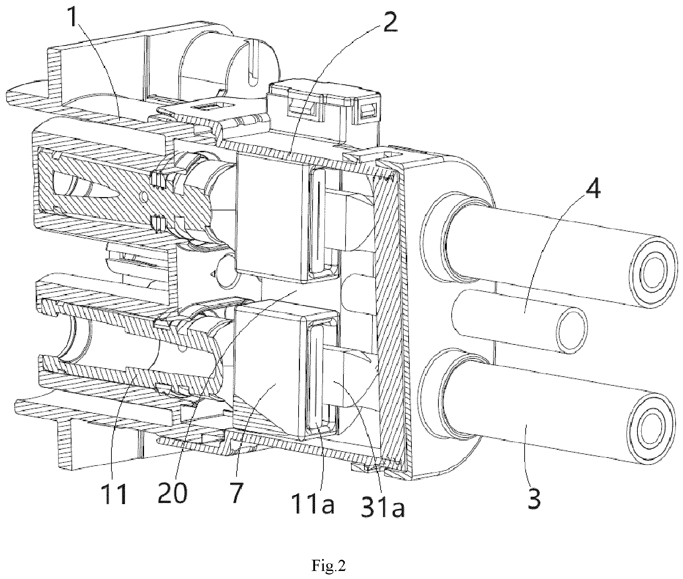

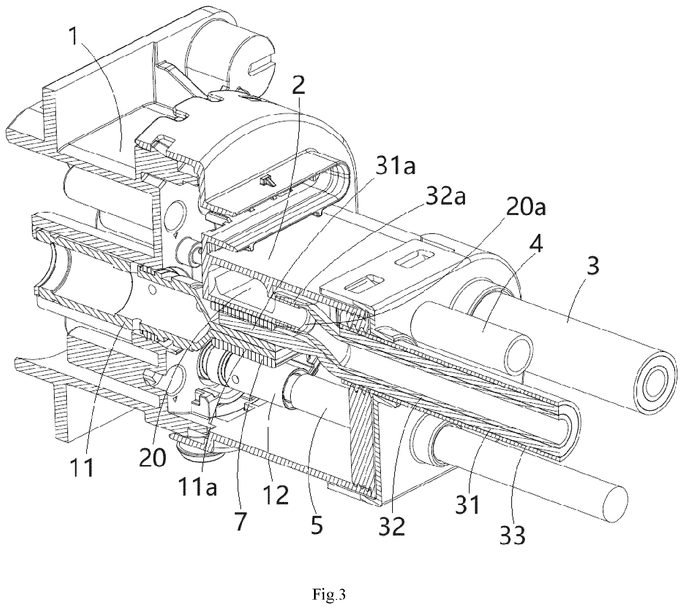

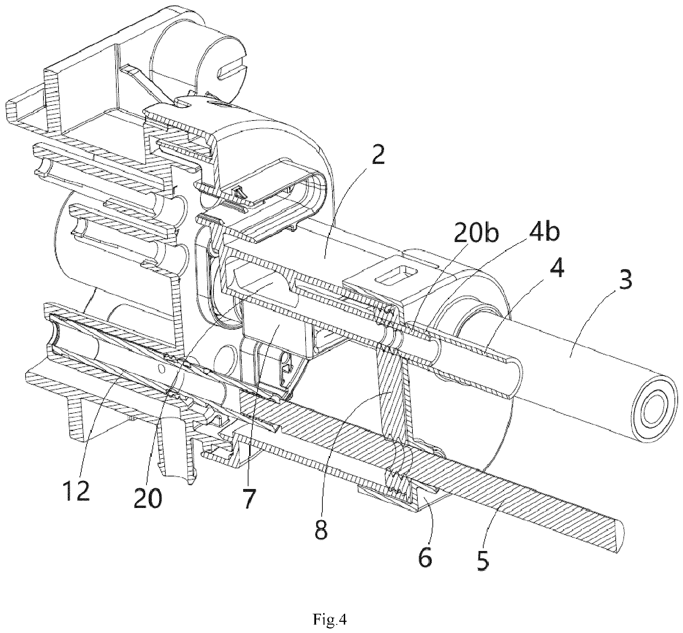

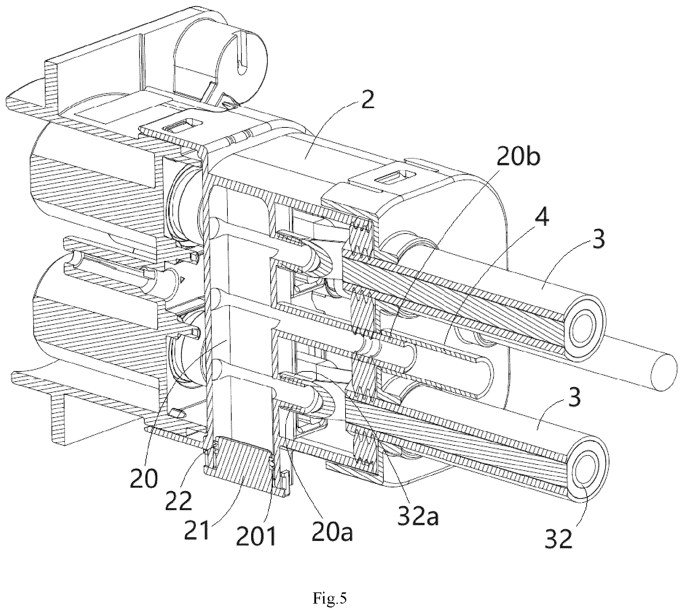

Figure 1 shows an illustrative perspective view of a charging seat according to an exemplary embodiment of the present invention; Figure 2 shows a cross-sectional view of a charging seat according to an exemplary embodiment of the present invention, in which the thermal conductive component 7 is shown; Figure 3 shows a cross-sectional view of a charging seat according to an exemplary embodiment of the present invention, which illustrates the cooling core pipe 31 of the charging cable 3 and the cooling core pipe joint 20a of the cooling chamber 20; Figure 4 shows a cross-sectional view of a charging seat according to an exemplary embodiment of the present invention, showing the inlet pipe joint 20b of the inlet pipe 4 and the cooling chamber 20; Figure 5 shows a cross-sectional view of a charging seat according to an exemplary embodiment of the present invention, which illustrates the cooling core pipe 32 of the charging cable 3, the cooling core pipe joint 20a of the cooling chamber 20, the inlet tube 4, and the inlet tube joint 20b of the cooling chamber 20.

As shown in Figures 1 to 5, in an exemplary embodiment of the present invention, a rear housing 2 for a charging seat is disclosed. A cooling chamber 20 is formed in the rear housing 2 of the charging seat, which has an inlet pipe joint 20b for connecting with the inlet pipe 4 and a cooling core pipe joint 20a for connecting with the cooling core pipe 32 of the charging cable 3, so that the cooling liquid can flow through the cooling chamber 20 of the rear housing 2 of the charging seat and the cooling core pipe 32 of the charging cable 3 to cool the interior of the charging seat and the charging cable 3.

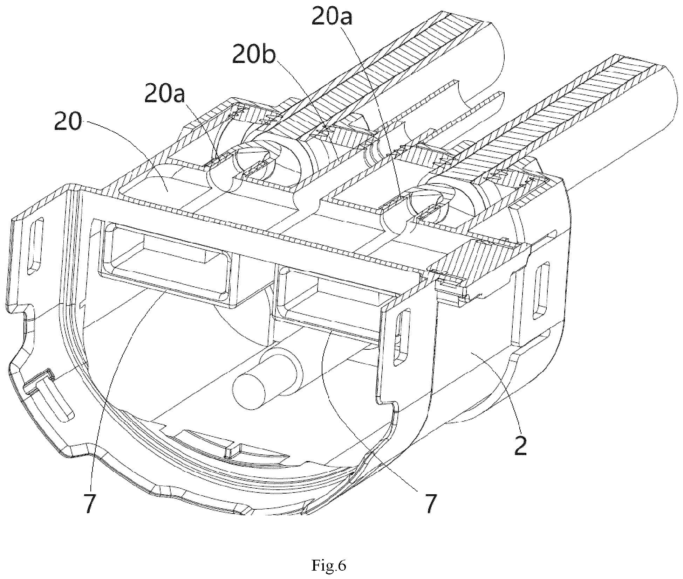

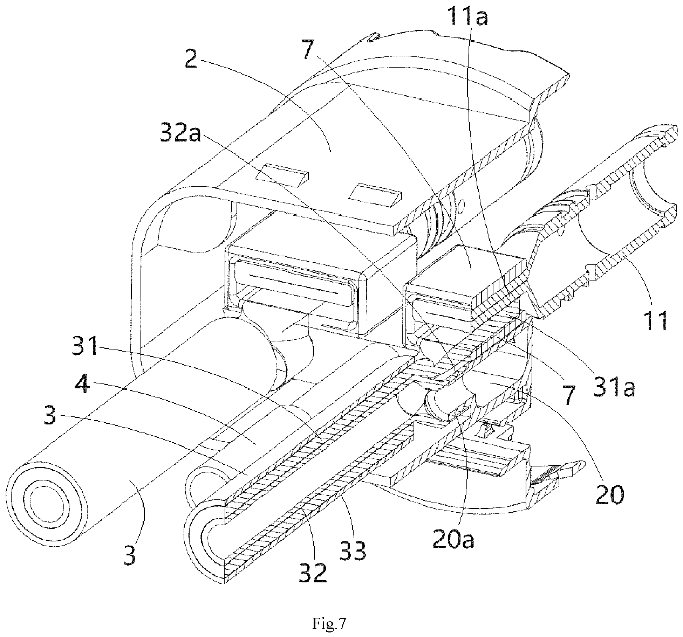

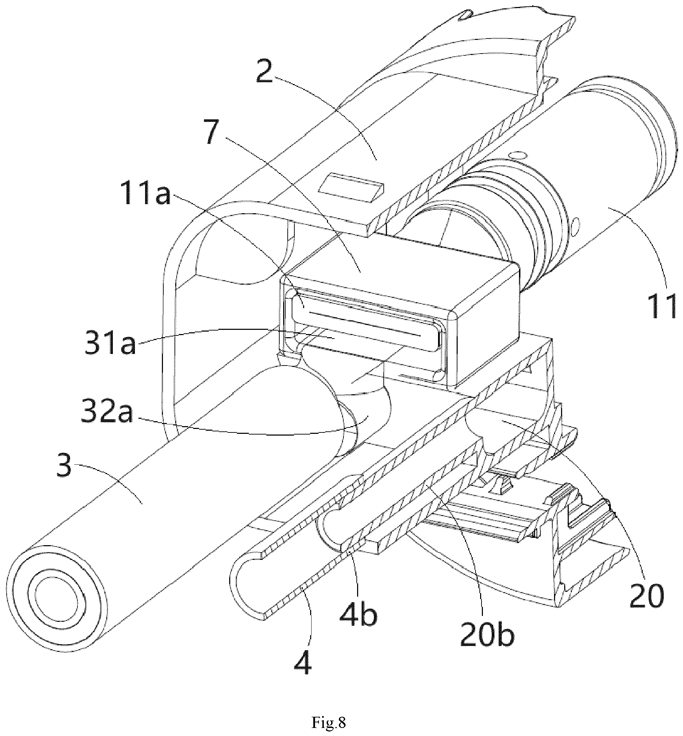

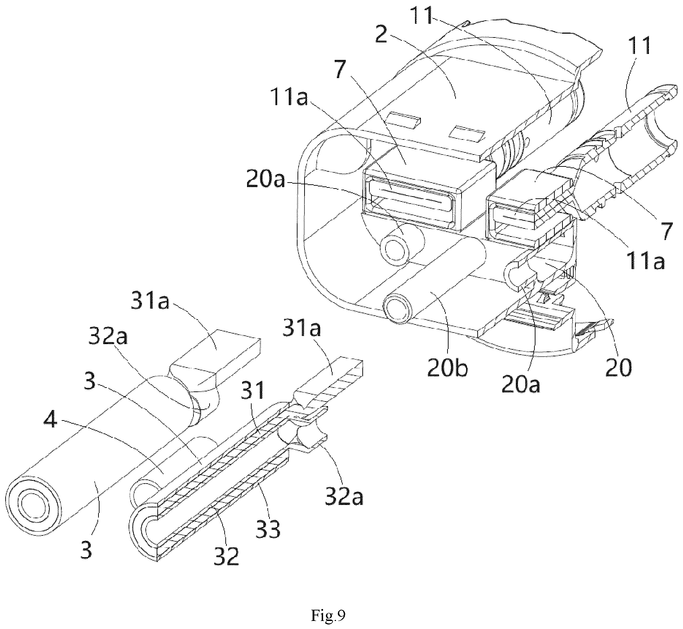

Figure 6 shows a cross-sectional view of the rear housing 2 of a charging seat according to an exemplary embodiment of the present invention, which illustrates the cooling core pipe 32 of the charging cable 3, the cooling core pipe joint 20a of the cooling chamber 20, the inlet tube 4, and the inlet tube joint 20b of the cooling chamber 20; Figure 7 shows a cross-sectional view of the rear housing 2 of a charging seat according to an exemplary embodiment of the present invention, which illustrates the cooling core pipe 32 of the charging cable 3, the cooling core pipe joint 20a of the cooling chamber 20, and the thermal conductive component 7; Figure 8 shows a cross-sectional view of the rear housing 2 according to an exemplary embodiment of the present invention, wherein the inlet pipe 4 and the inlet pipe joint 20b of the cooling chamber 20 are shown; Figure 9 shows an illustrative exploded view of the rear housing 2, charging cable 3, and inlet pipe 4 according to an exemplary embodiment of the present invention.

As shown in Figure 1 to Figure 9, in the illustrated embodiment, the cooling chamber 20 has at least two cooling core pipe joints 20a, which are used to connect with the cooling core pipes 32 of at least two charging cables 3 respectively, so that the cooling liquid can flow through the cooling core pipes 32 of at least two charging cables 3 simultaneously to cool at least two charging cables 3 simultaneously.

As shown in Figure 1 to Figure 9, in the illustrated embodiment, the cooling chamber 20 has two cooling core pipe joints 20a, which are arranged on both sides of the inlet pipe joint 20b and spaced apart from the inlet pipe joint 20b by a predetermined distance.

As shown in Figures 1 to 9, in another exemplary embodiment of the present invention, a charging seat is also disclosed. The charging seat includes: a front housing 1, a rear housing 2, a charging terminal 11, and a charging cable 3. The rear housing 2 is assembled onto the rear end of the front housing 1. The charging terminal 11 is provided in the front housing 1 of the charging seat and its rear end 11a extends into the inner cavity of the rear housing 2 of the charging seat. The charging cable 3 extends into the inner cavity of the charging seat's rear housing 2 and is electrically connected to the rear end 11a of the charging terminal 11. The charging cable 3 includes a conductor 31 and a cooling core pipe 32. The front end 31a of the conductor 31 is electrically connected to the rear end 11a of the charging terminal 11. The cooling core pipe 32 is connected to the cooling core pipe joint 20a of the cooling chamber 20 of the rear housing 2, so that the cooling liquid can flow through the cooling chamber 20 of the rear housing 2 and the cooling core pipe 32 of the charging cable 3.

As shown in Figures 1 to 9, in the illustrated embodiment, the conductor 31 of the charging cable 3 is tubular, the cooling core pipe 32 is provided in the conductor 31, and the charging cable 3 also includes an outer insulation layer 33 wrapped around the outside of the conductor 31.

As shown in Figures 1 to 9, in the illustrated embodiment, the front end 31a of the conductor 31 of the charging cable 3 and the rear end 11a of the charging terminal 11 are flat and welded together;
As shown in Figures 1 to 9, in the illustrated embodiment, the charging seat further comprises a thermal conductive component 7, which is arranged in the inner cavity of the rear housing 2 of the charging seat and is in physical contact with the rear end 11a of the charging terminal 11 and the outer wall surface of the cooling chamber 20, to transfer the heat of the rear end 11a of the charging terminal 11 to the cooling chamber 20.

As shown in Figure 1 to Figure 9, in the illustrated embodiment, the front end 31a of the conductor 31 and the rear end 11a of the charging terminal 11 are wrapped in the thermal conductive component 7 and in thermal contact with the inner surface of the thermal conductive component 7, and the outer surface of the thermal conductive component 7 is in thermal contact with the outer wall surface of the cooling chamber 20.

As shown in Figures 1 to 9, in the illustrated embodiment, the thermal conductive component 7 has a pair of flat inner surfaces and a pair of flat outer surfaces that are opposite in the thickness direction of the rear end 11a of the charging terminal 11. The pair of flat inner surfaces of the thermal conductive component 7 are in thermal contact with the front end 31a of the conductor 31 and the rear end 11a of the charging terminal 11, respectively. One of the pair of flat outer surfaces of the thermal conductive component 7 is in thermal contact with the outer wall surface of the cooling chamber 20.

As shown in Figures 1 to 9, in the illustrated embodiment, the charging seat includes multiple charging terminals 11, multiple charging cables 3, and multiple thermal conductive components 7. The multiple charging terminals 11 are electrically connected to the multiple charging cables 3, respectively, and are thermally connected to the outer wall surface of the cooling chamber 20 through a corresponding thermal conductive component 7.

As shown in Figures 1 to 9, in the illustrated embodiment, multiple first snap slots 2a are formed on the peripheral wall of the front end of the rear housing 2, and the multiple first snap slots 2a are distributed at intervals in the circumferential direction of the rear housing 2. Multiple first protrusions 1a are formed on the rear end of the rear housing 2, which are respectively engaged with multiple first snap slots 2a to fix the front end of the rear housing 2 to the rear end of the front housing 1.

As shown in Figures 1 to 9, in the illustrated embodiment, the charging seat further comprises a signal terminal 12 and a signal cable 5. The signal terminal 12 is provided in the front housing 1 of the charging seat and its rear end extends into the rear housing 2 of the charging seat. One end of signal cable 5 extends into the charging seat's rear housing 2 and is electrically connected to the rear end of signal terminal 12.

As shown in Figures 1 to 9, in the illustrated embodiment, the charging seat further includes a rear cover 6, which is installed on the rear port of the rear housing 2 to cover the rear port of the rear housing 2. A first through-hole is formed in the rear cover 6 to allow the charging cable 3 to pass through, a second through-hole is formed in the rear cover 6 to allow the signal cable 5 to pass through, and a third through-hole is formed in the rear cover 6 to allow the inlet pipe joint 20b to pass through.

As shown in Figures 1 to 9, in the illustrated embodiment, multiple second protrusions 2b are formed on the rear end of the rear housing 2, and the multiple second protrusions 2b are distributed at intervals in the circumferential direction of the rear housing 2. Multiple second snap slots 6b are formed on the rear cover 6, which are respectively engaged with multiple second protrusions 2b to fix the rear cover 6 to the rear end of the rear housing 2.

As shown in Figures 1 to 9, in the illustrated embodiment, the charging seat further comprises a sealing element 8, which is installed in the rear port of the rear housing 2 for sealing the rear port of the rear housing 2. The charging cable 3, signal cable 5, and inlet pipe joint 20b pass through the seal element 8, and the rear cover 6 is pressed against the seal element 8 to position seal element 8 in the rear port of rear housing 2.

As shown in Figures 1 to 9, in the illustrated embodiment, the charging seat further includes an inlet pipe 4, and one end 4b of the inlet pipe 4 is connected to the inlet pipe joint 20b for inputting the cooling liquid into the cooling chamber 20.

As shown in Figures 1 to 9, in the illustrated embodiment, the cooling chamber 20 also has a discharge port 201. The charging seat also includes a sealing plug 21 and a sealing ring 22. The sealing plug 21 is inserted into the discharge port 201. The seal ring 22 is fitted onto the seal plug 21. The sealing ring 22 is compressed between the sealing plug 21 and the inner wall of the discharge port 201 to achieve sealing between the two.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A rear housing for a charging seat,
wherein a cooling chamber (20) is formed in the rear housing (2) of the charging seat, the cooling chamber (20) has an inlet pipe joint (20b) for connecting with an inlet pipe (4) and a cooling core pipe joint (20a) for connecting with a cooling core pipe (32) of a charging cable (3), so that the cooling liquid can flow through the cooling chamber (20) of the rear housing (2) of the charging seat and the cooling core pipe (32) of the charging cable (3) to cool the interior of the charging seat and the charging cable (3).

2. The rear housing according to claim 1,
wherein the cooling chamber (20) has at least two cooling core pipe joints (20a), which are used to connect with the cooling core pipes (32) of at least two charging cables (3) respectively, so that the cooling liquid can flow through the cooling core pipes (32) of the at least two charging cables (3) simultaneously to cool the at least two charging cables (3).

3. The rear housing according to claim 1,
wherein the cooling chamber (20) has two cooling core pipe joints (20a), which are arranged on both sides of the inlet pipe joint (20b) and spaced apart from the inlet pipe joint (20b) by a predetermined distance.

4. A charging seat, comprising:
a front housing (1);
the rear housing (2) according to any one of claims 1-3, assembled onto the rear end of the front housing (1);
a charging terminal (11) which is provided in the front housing (1) of the charging seat and its rear end (1 1a) extends into the inner cavity of the rear housing (2) of the charging seat; and
a charging cable (3) which is inserted into the inner cavity of the rear housing (2) of the charging seat and electrically connected to the rear end (11a) of the charging terminal (11),
wherein the charging cable (3) comprises a conductor (31) and a cooling core pipe (32), the front end (31a) of the conductor (31) is electrically connected to the rear end (11a) of the charging terminal (11), and the cooling core pipe (32) is connected to the cooling core pipe joint (20a) of the cooling chamber (20) of the rear housing (2), so that the cooling liquid can flow through the cooling chamber (20) of the rear housing (2) and the cooling core pipe (32) of the charging cable (3).

5. The charging seat according to claim 4,
wherein the conductor (31) of the charging cable (3) is tubular, and the cooling core pipe (32) is provided in the conductor (31), the charging cable (3) also includes an outer insulation layer (33) wrapped around the outside of the conductor (31).

6. The charging seat according to claim 4,
wherein the front end (31a) of the conductor (31) of the charging cable (3) and the rear end (11a) of the charging terminal (11) are flat and welded together.

7. The charging seat according to claim 4, further comprising:
a thermal conductive component (7) which is installed in the inner cavity of the rear housing (2) of the charging seat and is in physical contact with both the rear end (11a) of the charging terminal (11) and the outer wall surface of the cooling chamber (20) to transfer heat from the rear end (11a) of the charging terminal (11) to the cooling chamber (20).

8. The charging seat according to claim 7,
wherein the front end (31a) of the conductor (31) and the rear end (11a) of the charging terminal (11) are wrapped in the thermal conductive component (7) and in thermal contact with the inner surface of the thermal conductive component (7), and the outer surface of the thermal conductive component (7) is in thermal contact with the outer wall surface of the cooling chamber (20).

9. The charging seat according to claim 8,
wherein the thermal conductive component (7) has a pair of flat inner surfaces and a pair of flat outer surfaces that are opposite in the thickness direction of the rear end (11a) of the charging terminal (11);
wherein the pair of flat inner surfaces of the thermal conductive component (7) are in thermal contact with the front end (31a) of the conductor (31) and the rear end (11a) of the charging terminal (11), respectively; one of the pair of flat outer surfaces of the thermal conductive component (7) is in thermal contact with the outer wall surface of the cooling chamber (20).

10. The charging seat according to claim 7,
wherein the charging seat comprises multiple charging terminals (11), multiple charging cables (3), and multiple thermal conductive components (7),
wherein the multiple charging terminals (11) are electrically connected to the multiple charging cables (3), respectively, and are thermally connected to the outer wall surface of the cooling chamber (20) through a corresponding thermal conductive component (7).

11. The charging seat according to claim 4,
wherein multiple first snap slots (2a) are formed on the peripheral wall of the front end of the rear housing (2), and the multiple first snap slots (2a) are distributed at intervals in the circumferential direction of the rear housing (2);
wherein multiple first protrusions (1a) are formed on the rear end of the rear housing (2), and the multiple first protrusions (1a) are respectively engaged with the multiple first snap slots (2a) to fix the front end of the rear housing (2) to the rear end of the front housing (1).

12. The charging seat according to claim 4, further comprising:
a signal terminal (12) which is provided in the front housing (1) of the charging seat and its rear end extends into the rear housing (2) of the charging seat; and
a signal cable (5), one end of which extends into the rear housing (2) of the charging seat and is electrically connected to the rear end of the signal terminal (12).

13. The charging seat according to claim 12, further comprising:
a rear cover (6) which is installed on the rear port of the rear housing (2) to cover the rear port of the rear housing (2),
wherein a first through-hole allowing the charging cable (3) to pass through, a second through-hole allowing the signal cable (5) to pass through, and a third through-hole allowing the inlet pipe joint (20b) to pass through are formed in the rear cover (6).

14. The charging seat according to claim 13,
wherein multiple second protrusions (2b) are formed on the rear end of the charging seat housing (2), and the multiple second protrusions (2b) are distributed at intervals in the circumferential direction of the charging seat housing (2);
wherein multiple second snap slots (6b) are formed on the rear cover (6), and the multiple second snap slots (6b) are respectively engaged with the multiple second protrusions (2b) to fix the rear cover (6) to the rear end of the rear housing (2).

15. The charging seat according to claim 13, further comprising:
a sealing element (8) which is installed in the rear port of the rear housing (2) to seal the rear port of the rear housing (2),
wherein the charging cable (3), the signal cable (5), and the inlet pipe joint (20b) pass through the sealing element (8), and the rear cover (6) is pressed against the sealing element (8) to position the sealing element (8) in the rear port of the rear housing (2).

16. The charging seat according to claim 4, further comprising:
an inlet pipe (4), one end of which is connected to the inlet pipe joint (20b), is used to input the cooling liquid into the cooling chamber (20).

17. The charging seat according to any one of claims 4-16,
wherein the cooling chamber (20) also has a discharge port (201),
wherein the charging seat further comprises:
a sealing plug (21) which is inserted into the discharge port (201); and
a sealing ring (22) which is fitted onto the sealing plug (21),
wherein the sealing ring (22) is compressed between the sealing plug (21) and the inner wall of the discharge port (201) to achieve sealing between the two.
